# EUROPEAN PATENT SPECIFICATION

(11) **EP 4 236 741 B1**
(45) Date of publication and mention of the grant of the patent: **27.11.2024**
(21) Application number: 21801514.7
(22) Date of filing: 27.10.2021
(51) Int. Cl.: A47J 37/07

(54) **ELECTRIC GRILL**
ELEKTRISCHER GRILL
GRIL ÉLECTRIQUE

(30) Priority: 29.10.2020 GB 202017147; 17.03.2021 GB 202103717
(43) Date of publication of application: 06.09.2023
(73) Proprietor: Active Food Systems Limited, Offord Cluny, St Neots Cambridgeshire PE19 5ZA (GB)
(72) Inventor: CADBURY, George Justin Peter, Offord Cluny, St Neots Cambridgeshire PE19 5ZA (GB); EDWARDS, Andrew Norman, Offord Cluny, St Neots Cambridgeshire PE19 5ZA (GB); O'ROURKE, Sam, Offord Cluny, St Neots Cambridgeshire PE19 5ZA (GB)
(74) Representative: Boult Wade Tennant LLP
(86) International application number: PCT/EP2021/079836
(87) International publication number: WO 2022/090317

(56) References cited:
- WO-A1-2007/007952
- WO-A1-2020/139853
- GB-A- 2 511 850
- KR-A- 20190 009 998
- US-A1- 2020 008 621

## Description

The present invention relates to an electric grill, also known as a chargrill, in which food is cooked while resting on heated grill bars.

Typical commercial electric chargrills utilise electric heating elements housed within the grill bars on which food items rest. Fats and oils generated by the cooking process are channelled away into a fat tray, which may also contain water to reduce the risk of fat fires. Over time, the fat tray will become full of fatty residue and this must be safely disposed of. However, fat fires are still a major concern and there are widespread problems with inappropriate disposal of fatty residues such as disposal down drains.

KR 2019 0009998 describes an example of a known electric grill. This includes an electrically heated heating platform, with side walls and grill bars spaced above it to define a heating chamber. An air supply is located in the side walls.

The present invention provides an electric grill comprising a heating platform, a plurality of side walls, a plurality of grill bars spaced above the heating platform and a heating chamber defined between the heating platform, the side walls and the grill bars, wherein the heating platform is electrically heated, the grill further comprising a first air supply located centrally in the heating platform for delivery of pressurised air into the heating chamber and configured to direct airflow out across the heating platform, and a secondary air supply located in the side walls and configured to direct airflow along the side walls to create a vortex of air flowing around the centrally located first air supply.

Preferably, the heating platform comprises two conductive plates with electric heating elements sandwiched in between them. For example, the first plate may comprise upper and lower surfaces and a plurality of grooves are formed on the lower surface, the second plate may comprise upper and lower surfaces and a plurality of grooves are formed in the upper surface, wherein the grooves in the first and second plates co-operate to form channels for receiving heating elements when the first and second plates are sandwiched together.

The grill bars do not contain heating elements and are heated by radiation from the heating platform. Preferably the heating platform is configured to reach a temperature of up to 500°C so as to heat the grill bars to a temperature up to 350°C. For example, the heating platform may be formed from metal or a ceramic material.

The first air supply may comprise at least one opening in the heating platform connected to a source of pressurised air and an airflow diverter configured to divert airflow evenly across the surface of the heating platform. The airflow diverter may comprise an elongate column extending through an opening in the heating platform and a cap mounted on the upper end of the column. In particular the airflow diverter may comprise a column with a plurality of radially projecting ribs.

The second air supply may comprise at least one opening in each side wall located adjacent an end of the side wall and connected to a source of pressurised air.

Preferably, the heating platform and side walls are located within a housing having inner and outer walls and an air chamber between the inner and outer walls, wherein the air chamber is connected to a source of pressurised air and communicates with the opening in the heating platform and with the openings in the side walls. Typically, the source of pressurised air comprises at least one fan.

In another embodiment, the heating platform and side walls are located within a housing having inner and outer walls and a first air chamber between the inner and outer walls, wherein the air chamber is connected to a source of pressurised air and communicates with the openings in the side walls of the heating chamber, and further comprising a second air chamber defined between the heating platform and the inner wall of the housing, wherein the source of pressurised air comprises a fan configured to draw air from the second air chamber and to supply it to the first air chamber.

The present invention will now be described, by way of example only, with reference to the accompanying drawings in which:
Figure 1 is a perspective view of an electric grill in accordance with one embodiment of the present invention;
Figure 2a shows the grill of Figure 1 with the grill bars removed to show the heating chamber and heating platform beneath;
Figure 2b is similar to Figure 2a but shows the upper plate of the heating platform also removed;
Figure 3 is a perspective cross sectional view of the grill of Figure 1 from below, with some parts removed to show the underside of the heating platform;
Figure 4 is a perspective cross sectional view of the device of Figure 2b from above, showing the air chamber;
Figure 5 shows a cross-section of the air channelling device;
Figure 6 is a view of the top of the air channelling device with the upper cap removed;
Figure 7 is a schematic plan view of the heating platform illustrating the airflow;
Figure 8 is a side view, partly in section, of a second embodiment of the present invention.

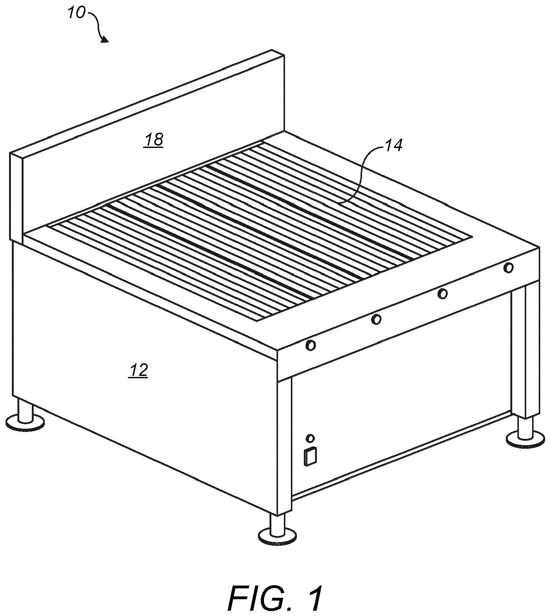

Figure 1 shows a perspective view of an electric grill 10 in accordance with one embodiment of the present invention. This is illustrated as a freestanding unit, but a grill incorporating the present invention could also be configured as a built-in unit.

The grill 10 comprises a body 12 largely made of sheet metal. Grill bars 14 are provided above a heating chamber which is subscribed further below. The body 12 may include a vertical back plate 18. Although not shown, a hinged lid may also be provided which can close over the top of the grill bars 14 to provide an enclosed cooking chamber. The grill bars 14 are typically made of cast iron and are able to withstand temperatures up to about 250-350°C.

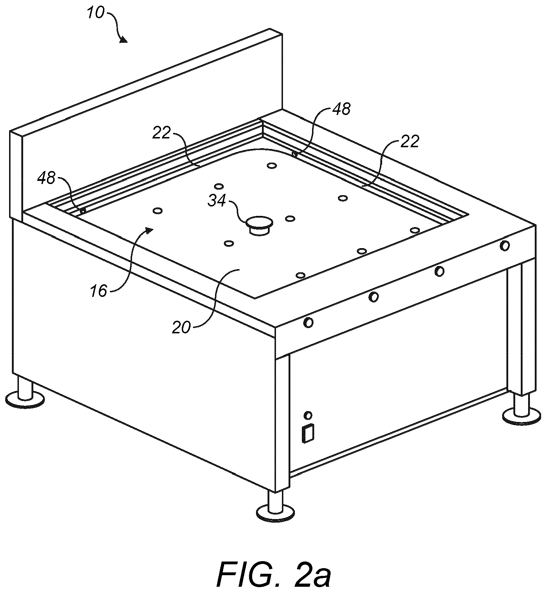

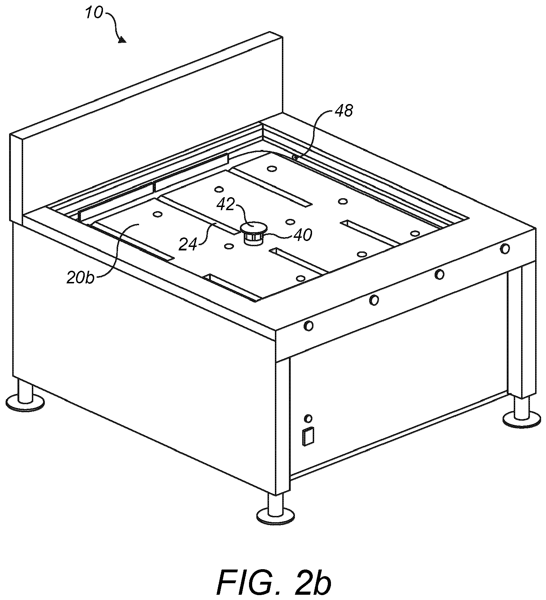

Figures 2a and 2b show part of the grill 10 in Figure 1 with the grill bars 14 removed to show the heating chamber 16 beneath. The heating chamber 16 is defined between a heating platform 20, side walls 22 and the grill bars 14 (when present).

The heating platform 20 is electrically heated. Electrically powered heating elements may be located within the heating platform 20. For example, the heating platform 20 may comprise two metal plates 20a,20b each with upper and lower surfaces. The lower surface of the upper plate 20a and the upper surface of the lower plate 20b are both machined with a number of grooves 24. When the plates 20a and 20b are sandwiched together the grooves 24 in each plate align to define channels into which heating elements are fitted. For example, the grooves 24 may be semi-circular in cross-section so that when the plates 20a and 20b are sandwiched together, the grooves 24 align to define channels with a circular cross-section. Figure 2a shows the upper plate 20a in place and Figure 2b shows the lower plate 20b with the grooves 24, the upper plate 20a having been removed for illustrative purposes.

As noted above, the two plates 20a, 20b may both be formed of metal, e.g. steel, or another conductive material, for example a ceramic material such as silicon carbide. In this case, heat insulation may be provided underneath the heating platform 20. Alternatively, the lower plate 20b may itself be formed from an insulative material.

In use, the heating platform 20 is heated by the heating elements and acts as a primary heat source for cooking. The grill bars 14 which are located a short distance, e.g. 20-70 cm, above the heating platform 20 are heated largely by radiant heat and some convection from the heating platform 20. Thus, the grill bars 14 form a secondary heat source for cooking, but do not contain heating elements themselves. The heating platform 20 is typically heated to a temperature up to about 500°C, at which pyrolytic processes occur, and this enables the grill bars 14 to reach a temperature of 250-350°C. This source of primary heat provided by the heating elements set inside the heating platform 20 remains at a constant temperature, and so any required changes to the secondary heat source for different cooking styles can be achieved through adjustments to the depth between the grill bars 14 and the heating platform 20.

Food items resting on the grill bars 14 are cooked through primarily by heat from the primary heat source, that is the heating platform 20. Direct contact of the food items with the secondary heat source, i.e. the grill bars 14, brands the food items with chargrill lines without completely burning the food items. The temperature which the grill bars 14 attain provides a suitable environment for the Maillard reaction to occur, which gives food its distinctive browned appearance and desirable flavour.

The grill 10 of the present invention does not include a fat tray to collect excess fats and oils. Instead, the grill 10 further comprises a forced air supply system to help the oxidation process of any fat and oils produced by the foodstuffs that would otherwise drip down into the heating chamber 16 during cooking.

When fats and oils combust, the large carbon chain molecules associated with them require more oxygen to achieve complete combustion. With insufficient airflow, a sooty, carbon rich flame with excess carbon monoxide will be produced. However, in the present invention, the forced air supply results in cleaner burning of the fats and oils and a reduction of the black acrid smoke associated with partially burnt oils and fats. It is known that pyrolytic actions commence at around 500°C and with the addition of oxidation in an aerated environment provided by the forced air supply of the present invention, this can aid in the oxidation of the organic material into an inorganic dust or ash. Therefore, the grill 10 of the present invention ensures complete combustion of any oils and fats, leaving only light ash residue which can be easily vacuumed away during periodic cleaning. The grill 10 does not create fatty residues which present a risk of fire as well as health and environmental concerns.

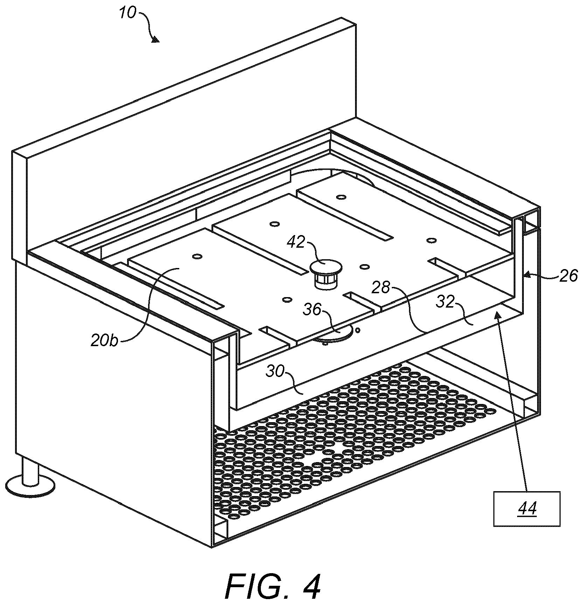

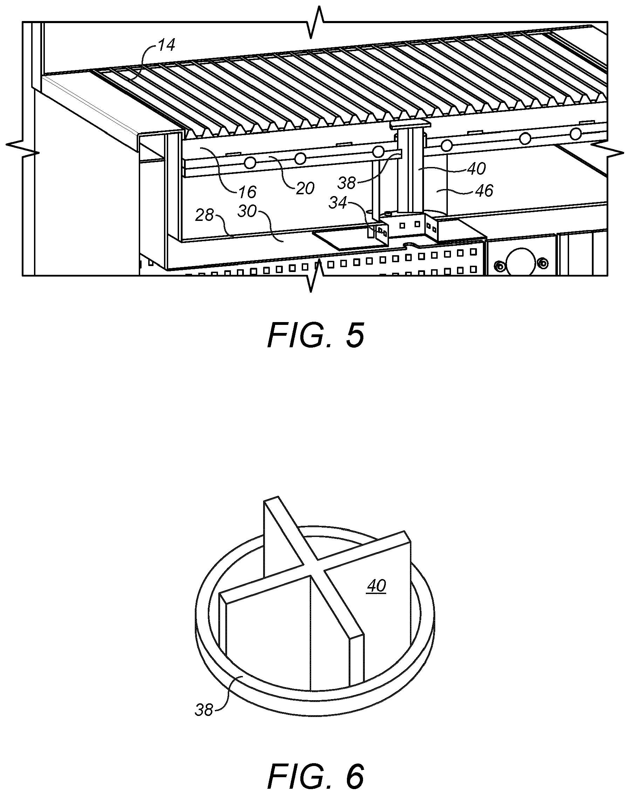

To provide the forced air supply system in the present invention, the heating chamber 16 is provided within a double-skinned support structure 26 which includes first and second air supplies which supply pressurised air into the heating chamber 16. The support structure 26 comprises inner and outer casings 28,30 nested together with an air chamber 32 between them. This can be seen in Figure 4. The inner casing 28 has a centrally located opening 36. Below opening 36 there may be an air inlet assembly 34 comprising a perforated wall extending between the inner and outer casings 28,30 defining a central air chamber beneath the opening 36. The structure of the air inlet assembly 34 may be similar to that described in GB2511850. A tube 46 extends upwardly from the opening 36 to the underside of the heating platform 20. The heating platform 20 is also provided with a central opening 38 which is coaxial, but of a smaller diameter, than the tube 46 and the opening 36. These features are best seen in Figure 5.

Pressurised air is supplied into the chamber 32, for example by fan 44 (which is shown only schematically in Figure 4, although in practice this may be located within the body 12 of the grill 10, below the support structure 26).

The first (primary) air supply delivers pressurised air into a central region of the heating chamber 16. Pressurised air from the air chamber 32 passes, via the air inlet assembly 34 and the opening 36 into the tube 46 and then through opening 38 in the heating platform 20 into the heating chamber 16.

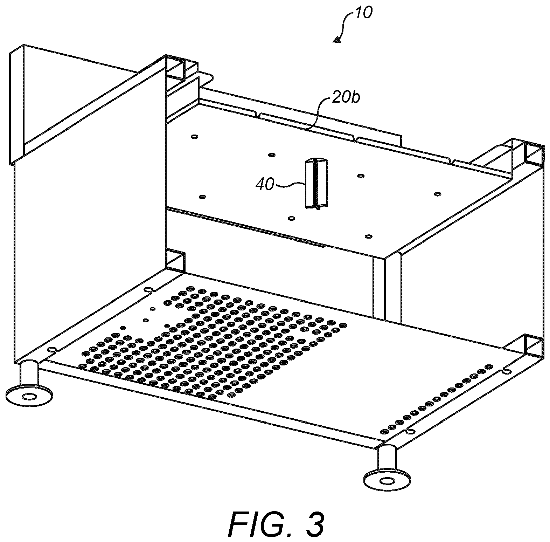

An air channelling device 40 is located in the opening 38 and protrudes up into the heating chamber 16 and down into the tube 46 towards opening 36. The air channelling device 40 comprises a central column with a plurality of radially projecting ribs. For example, there may be four projecting ribs, so that it is cruciform in cross-section as seen in Figures 3 and 5. A circular cap 42 is located on the top end of the air channelling device 40 as seen in Figure 4. The lower part of the air channelling device 40 can be seen in Figure 3 while the upper end, without the cap, is illustrated in Figure 6. The air channelling device 40 divides the opening 38 in the heating platform 20 into four quadrants. The cap 42 deflects upward airflow passing through these four quadrants and diverts it laterally to flow out into the heating chamber 16 across the heating platform 20. This arrangement distributes airflow fairly evenly around the heating chamber 16.

The secondary air supply comprises a plurality of openings 48 in the side walls 22 of the heating chamber 16. Preferably one or more openings 48 are provided in each side wall, located at one end near to a corner where one side wall 22 meets the next. The openings 48 communicate with the air chamber 32 formed in the support structure 26 and therefore jets of pressurised air exit the openings 48 into the heating chamber 16. Since the openings 48 are located towards the corners, this tends to create a vortex airflow which swirls around the heating chamber 16. This helps to pull the airflow from the primary air source in the centre outwardly, to ensure there is good airflow throughout the whole heating chamber 16. In addition, if any fat or oil droplets do combust, the airflow pushes such flare ups laterally rather than upwards. This minimises the flare up and also prevents the food being cooked from becoming burnt.

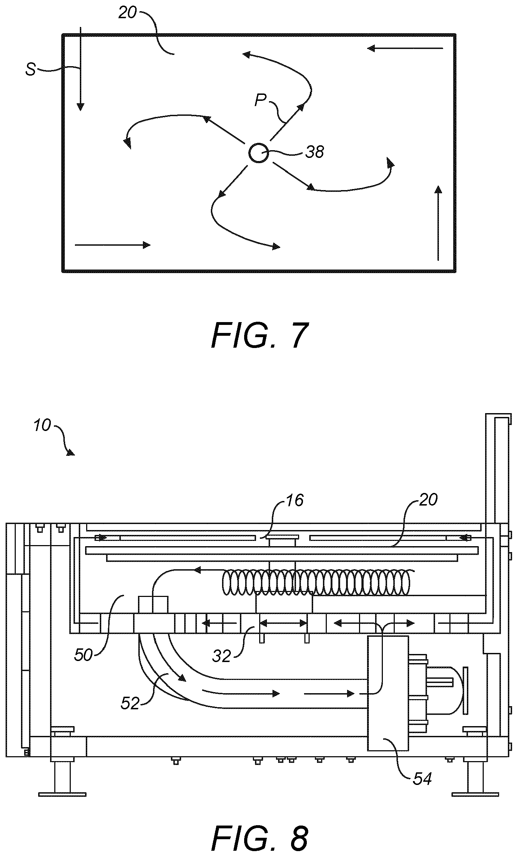

Figure 7 is a schematic plan view of the heating platform 20 illustrating the airflow. The arrows P emanating out from the central opening 38 represent the airflow extending out in all directions from the first air supply. The arrows S extending from close to the corners and along the edges represent the airflow from the second air supply which tends to swirl around the heating chamber 16, in this case in an anticlockwise direction. The air flow from central opening 38 initially spreads out radially in all directions across the heating platform 22 but is gradually diverted by the air flow from openings 48 in order to create the vortex of air flowing around the opening 38.

The forced airflow provided by the first and second air supplies permits fuller combustion of any fats and oils from the food items. Any flames which do occur burn more cleanly and quickly and the production of smoke is reduced or eliminated. Any residue will form ash or dust which can be cleared from the heating chamber 16 by vacuuming. No fatty residue or stagnant oil remains to be disposed of.

As noted above, the grill 10 of the present invention does not include a fat tray to collect fats and oils dripping from the food being cooked. Instead, the heating chamber 16 below the grill bars 14 is an enclosed, controlled environment with airflows provided in a controlled manner via the first and second air supplies. Air can only be exhausted from the heating chamber 16 from the top, through the grill bars 14. This contrasts with conventional grills which require fat trays beneath the grill bars and are therefore of a more open construction and subject to external, uncontrolled air movements below the grill bars. In the present invention, the enclosed heating chamber with controlled airflows provides the improved performance of the present invention.

In this way, an improved electric grill is provided. The grill cooks foodstuffs quickly and efficiently, to maintain flavour and texture and with minimal shrinkage. It also obtains the desired chargrill characteristics without burning the food or creating unwanted smoke and fatty residues. The entire heating chamber is heated to a very high temperature which allows the vapourisation of animal fats and oils to occur, minimising residues and keeping the food items succulent.

An alternative embodiment of the electric grill 10 of the present invention is shown in Figure 8. This differs from the embodiment above in relation to certain features of the secondary air supply into the heating chamber 16, although the other features of the grill 10 are the same as described previously.

In this case, the secondary airflow supplied to the openings 48 in the side walls 22 of the heating chamber 16 is drawn from a second air chamber 50 which is the space between the inner casing 28 and the underside of the heating platform 20. The air in this second air chamber 50 will be heated up when the grill 10 is in use and is drawn via a duct 52 connecting the space 50 to a fan 54. The fan 54 then supplies this heated air into the air chamber 32 between the inner and outer casings 28,30 of the support structure 26. This heated air then flows via the openings 48 into the heating chamber 16 to create the vortex airflow which swirls around the heating chamber 16. The heated air may also be supplied to the air inlet assembly 34 and into the centre of the heating platform 20 in the heating chamber 16. Alternatively, the primary air supply to the air inlet assembly 34 may be ambient air supplied by another fan.

Providing heated air from the second air chamber 50 as the secondary airflow further improves the efficiency of the grill 10. Using air from the second air chamber 50 avoid excessive heat build-up in this part of the grill 10. Furthermore, supplying an already heated airflow into the heating chamber 16 maintains a higher temperature in the corners of the heating chamber 16. This in turn reduces the power requirements of the heating elements in the heating platform 20 so that lower wattage heating elements can be used to maintain an equivalent temperature in the heating chamber 16. Thus, the overall energy input required for the grill 10 is reduced, maximising the efficiency of the product.

## Claims

1. An electric grill (10) comprising a heating platform (20), a plurality of side walls (22), a plurality of grill bars (14) spaced above the heating platform (20) and a heating chamber (16) defined between the heating platform (20), the side walls (22) and the grill bars (14), wherein the heating platform (20) is electrically heated, **characterized in that** the grill (10) further comprises a first air supply located centrally in the heating platform (20) for delivery of pressurised air into the heating chamber (20) and configured to direct airflow evenly across the heating platform (20), and a secondary air supply located in the side walls (22) and configured to direct airflow along the side walls (22) to create a vortex of air flowing around the centrally located air supply.

2. An electric grill (10) as claimed in claim 1, wherein the heating platform (20) comprises two conductive plates (20a, 20b) with electric heating elements sandwiched in between them.

3. An electric grill (10) as claimed in claim 2, wherein the first plate (20a) comprises upper and lower surfaces and a plurality of grooves (24) are formed on the lower surface, the second plate (20b) comprises upper and lower surfaces and a plurality of grooves (24) are formed in the upper surface, wherein the grooves (24) in the first and second plates (20a, 20b) co-operate to form channels for receiving heating elements when the first and second plates (20a, 20b) are sandwiched together.

4. An electric grill (10) as claimed in any preceding claim, wherein the grill bars (14) do not contain heating elements and are heated by radiation from the heating platform (20).

5. An electric grill (10) as claimed in claim 4, wherein the heating platform (20) is configured to reach a temperature of up to 500°C so as to heat the grill bars (14) to a temperature up to 350°C.

6. An electric grill (10) as claimed in any preceding claim, wherein the heating platform (20) is formed from metal or a ceramic material.

7. An electric grill (10) as claimed as claimed in any preceding claim, wherein the first air supply comprises at least one opening (36) in the heating platform (20) connected to a source of pressurised air and an airflow diverter (40) configured to divert airflow out across the surface of the heating platform (20).

8. An electric grill (10) as claimed in claim 7, wherein the airflow diverter (40) comprises an elongate column extending through the opening (36) in the heating platform (20) and a cap (42) mounted on the upper end of the column.

9. An electric grill (10) as claimed in claim 8, wherein the airflow diverter (40) comprises a column with a plurality of radially projecting ribs.

10. An electric grill (10) as claimed in any preceding claim, wherein the second air supply comprises at least one opening (48) in each side wall (22) located adjacent an end of the side wall (22) and connected to a source of pressurised air.

11. An electric grill (20) as claimed as claimed in any preceding claim, wherein the heating platform (20) and side walls (22) are located within a housing (26) having inner and outer walls (28, 30) and an air chamber (32) between the inner and outer walls (28, 30), wherein the air chamber (32) is connected to a source of pressurised air and communicates with the opening (36) in the heating platform (20) and with the openings (48) in the side walls (22).

12. An electric grill (10) as claimed in claim 10 or claim 11, wherein the source of pressurised air comprises at least one fan (44).

13. An electric grill (10) as claimed in claim 10, wherein the heating platform (20) and side walls (22) are located within a housing (26) having inner and outer walls (28, 30) and a first air chamber (32) between the inner and outer walls (28, 30), wherein the air chamber (32) is connected to a source of pressurised air and communicates with the openings (48) in the side walls (28, 30) of the heating chamber (16), and further comprising a second air chamber (50) defined between the heating platform (20) and the inner wall (28) of the housing (26), wherein the source of pressurised air comprises a fan (54) configured to draw air from the second air chamber (50) and to supply it to the first air chamber (32).

14. An electric grill (10) as claimed in any preceding claim, further comprising a lid which is closeable over the grill bars (14) to provide an enclosed cooking chamber.

## Patentansprüche

1. Elektrischer Grill (10), der eine Heizplatte (20), eine Vielzahl von Seitenwänden (22), eine Vielzahl von Grillrost-Stäben (14), die im Abstand zueinander über der Heizplatte (20) angeordnet sind, sowie eine Heizkammer (16) umfasst, die zwischen der Heizplatte (20), den Seitenwänden (22) und den Grillrost-Stäben (14) festgelegt ist, wobei die Heizplatte (20) elektrisch aufgeheizt wird, **dadurch gekennzeichnet, dass** der Grill (10) weiter eine erste Luftzufuhr umfasst, die zentral in der Heizplatte (20) zur Bereitstellung von Druckluft in die Heizkammer (20) angeordnet ist und derart konfiguriert ist, dass sie einen Luftstrom gleichmäßig über die Heizplatte (20) lenkt, sowie eine zweite Luftzufuhr umfasst, die in den Seitenwänden (22) angeordnet ist und derart konfiguriert ist, dass sie einen Luftstrom entlang der Seitenwände (22) lenkt, um einen Luftwirbel zu erzeugen, der die zentral angeordnete Luftzufuhr umströmt.

2. Elektrischer Grill (10) nach Anspruch 1, wobei die Heizplatte (20) zwei leitende Platten (20a, 20b) mit elektrischen Heizelementen umfasst, die zwischen den leitenden Platten eingebettet sind.

3. Elektrischer Grill (10) nach Anspruch 2, wobei die erste Platte (20a) obere und untere Seiten umfasst und eine Vielzahl von Einkerbungen (24) auf der Unterseite ausgebildet sind, wobei die zweite Platte (20b) obere und untere Seiten umfasst und eine Vielzahl von Einkerbungen (24) in der Oberseite ausgebildet sind, wobei die Einkerbungen (24) in der ersten und zweiten Platte (20a, 20b) zusammenwirken, um Kanäle zur Aufnahme von Heizelementen zu bilden, wenn die erste und zweite Platte (20a, 20b) zusammengepresst werden.

4. Elektrischer Grill (10) nach einem der vorhergehenden Ansprüche, wobei die Grillrost-Stäbe (14) keine Heizelemente enthalten und durch Bestrahlung von der Heizplatte (20) aufgeheizt werden.

5. Elektrischer Grill (10) nach Anspruch 4, wobei die Heizplatte (20) konfiguriert ist, eine Temperatur von bis zu 500°C zu erreichen, so dass die Grillrost-Stäbe (14) auf eine Temperatur von bis zu 350°C aufgeheizt werden.

6. Elektrischer Grill (10) nach einem der vorhergehenden Ansprüche, wobei die Heizplatte (20) aus Metall oder einem keramischen Werkstoff gebildet ist.

7. Elektrischer Grill (10) nach einem der vorhergehenden Ansprüche, wobei die erste Luftzufuhr mindestens eine Öffnung (36) in der Heizplatte (20) umfasst, die mit einer Druckluftquelle und einem Luftstrom-Ablenkblech (40) verbunden ist, das zum Ablenken eines Luftstroms über der Oberfläche der Heizplatte (20) raus konfiguriert ist.

8. Elektrischer Grill (10) nach Anspruch 7, wobei das Luftstrom-Ablenkblech (40) eine längliche Säule, die sich durch die Öffnung (36) in der Heizplatte (20) erstreckt, und eine Kappe (42) umfasst, die auf dem oberen Ende der Säule angebracht ist.

9. Elektrischer Grill (10) nach Anspruch 8, wobei das Luftstrom-Ablenkblech (40) eine Säule mit einer Vielzahl von sich radial erstreckenden Lamellen umfasst.

10. Elektrischer Grill (10) nach einem der vorhergehenden Ansprüche, wobei die zweite Luftzufuhr mindestens eine Öffnung (48) in jeder Seitenwand (22) umfasst, die neben einem Ende der Seitenwand (22) angeordnet ist und mit einer Druckluftquelle verbunden ist.

11. Elektrischer Grill (20) nach einem der vorhergehenden Ansprüche, wobei die Heizplatte (20) und die Seitenwände (22) in einem Gehäuse (26) mit Innen- und Außenwänden (28, 30) und einer Luftkammer (32) zwischen der Innen- und Außenwand (28, 30) angeordnet sind, wobei die Luftkammer (32) mit einer Druckluftquelle verbunden ist und mit der Öffnung (36) in der Heizplatte (20) und mit den Öffnungen (48) in den Seitenwänden (22) in Verbindung steht.

12. Elektrischer Grill (10) nach Anspruch 10 oder Anspruch 11, wobei die Druckluftquelle mindestens einen Lüfter (44) umfasst.

13. Elektrischer Grill (10) nach Anspruch 10, wobei die Heizplatte (20) und die Seitenwände (22) in einem Gehäuse (26) mit Innen- und Außenwänden (28, 30) und einer ersten Luftkammer (32) zwischen der Innen- und Außenwand (28, 30) angeordnet sind, wobei die Luftkammer (32) mit einer Druckluftquelle verbunden ist und mit den Öffnungen (48) in den Seitenwänden (28, 30) der Heizkammer (16) in Verbindung steht, und wobei das Gehäuse weiter eine zweite Luftkammer (50) umfasst, die zwischen der Heizplatte (20) und der Innenwand (28) des Gehäuses (26) festgelegt ist, wobei die Druckluftquelle einen Lüfter (54) umfasst, der konfiguriert ist, Luft aus der zweiten Luftkammer (50) zu saugen und diese der ersten Luftkammer (32) zuzuführen.

14. Elektrischer Grill (10) nach einem der vorhergehenden Ansprüche, der weiter einen Deckel umfasst, der über den Grillrost-Stäben (14) schließbar ist, um einen abgeschlossenen Garraum bereitzustellen.

## Revendications

1. Gril électrique (10) comprenant une plate-forme de chauffage (20), une pluralité de parois latérales (22), une pluralité de barres de gril (14) espacées au-dessus de la plate-forme de chauffage (20) et une chambre de chauffage (16) définie entre la plate-forme de chauffage (20), les parois latérales (22) et les barres de gril (14), dans lequel la plate-forme de chauffage (20) est chauffée électriquement,
**caractérisé en ce que**
le gril (10) comprend en outre une première alimentation en air située de manière centrale dans la plate-forme de chauffage (20) pour délivrer de l'air sous pression dans la chambre de chauffage (20) et configurée pour diriger un flux d'air uniformément à travers la plate-forme de chauffage (20), et une second alimentation en air située dans les parois latérales (22) et configurée pour diriger un flux d'air le long des parois latérales (22) afin de créer un tourbillon d'air s'écoulant autour de l'alimentation en air située de manière centrale.

2. Gril électrique (10) selon la revendication 1, dans laquelle la plate-forme de chauffage (20) comprend deux plaques conductrices (20a, 20b) avec des éléments chauffants électriques enserrés entre celles-ci.

3. Gril électrique (10) selon la revendication 2, dans laquelle la première plaque (20a) comprend des surfaces supérieure et inférieure, et une pluralité de rainures (24) sont formées sur la surface inférieure, la seconde plaque (20b) comprend des surfaces supérieure et inférieure, et une pluralité de rainures (24) sont formées dans la surface supérieure, dans lequel les rainures (24) dans les première et seconde plaques (20a, 20b) coopèrent pour former des canaux pour recevoir des éléments chauffants lorsque les première et seconde plaques (20a, 20b) sont enserrées ensemble.

4. Gril électrique (10) selon l'une quelconque des revendications précédentes, dans lequel les barres de gril (14) ne contiennent pas d'éléments chauffants et sont chauffées par un rayonnement provenant de la plate-forme de chauffage (20).

5. Gril électrique (10) selon la revendication 4, dans lequel la plate-forme de chauffage (20) est configurée pour atteindre une température allant jusqu'à 500°C de manière à chauffer les barres de gril (14) à une température allant jusqu'à 350°C.

6. Gril électrique (10) selon l'une quelconque des revendications précédentes, dans lequel la plate-forme de chauffage (20) est formée à partir d'un métal ou d'un matériau de céramique.

7. Gril électrique (10) selon l'une quelconque des revendications précédentes, dans lequel la première alimentation en air comprend au moins une ouverture (36) dans la plate-forme de chauffage (20) connectée à une source d'air sous pression et un dispositif de déviation de flux d'air (40) configuré pour dévier le flux d'air à travers la surface de la plate-forme de chauffage (20).

8. Gril électrique (10) selon la revendication 7, dans lequel le dispositif de déviation de flux d'air (40) comprend une colonne allongée s'étendant à travers l'ouverture (36) dans la plate-forme de chauffage (20) et un capuchon (42) monté sur l'extrémité supérieure de la colonne.

9. Gril électrique (10) selon la revendication 8, dans lequel le dispositif de déviation de flux d'air (40) comprend une colonne avec une pluralité de nervures faisant saillie radialement.

10. Gril électrique (10) selon l'une quelconque des revendications précédentes, dans lequel la seconde alimentation en air comprend au moins une ouverture (48) dans chaque paroi latérale (22) située adjacente à une extrémité de la paroi latérale (22) et reliée à une source d'air sous pression.

11. Gril électrique (20) selon l'une quelconque des revendications précédentes, dans lequel la plate-forme de chauffage (20) et les parois latérales (22) sont situées à l'intérieur d'un logement (26) présentant des parois interne et externe (28, 30) et une chambre à air (32) entre les parois interne et externe (28, 30), dans lequel la chambre à air (32) est reliée à une source d'air sous pression et communique avec l'ouverture (36) dans la plate-forme de chauffage (20) et avec les ouvertures (48) dans les parois latérales (22).

12. Gril électrique (10) selon la revendication 10 ou la revendication 11, dans lequel la source d'air sous pression comprend au moins un ventilateur (44).

13. Gril électrique (10) selon la revendication 10, dans lequel la plate-forme de chauffage (20) et les parois latérales (22) sont situées à l'intérieur d'un logement (26) présentant des parois interne et externe (28, 30) et une première chambre à air (32) entre les parois interne et externe (28, 30), dans lequel la chambre à air (32) est reliée à une source d'air sous pression et communique avec les ouvertures (48) dans les parois latérales (28, 30) de la chambre de chauffage (16), et comprenant en outre une seconde chambre à air (50) définie entre la plate-forme de chauffage (20) et la paroi interne (28) du logement (26), dans lequel la source d'air sous pression comprend un ventilateur (54) configuré pour attirer de l'air à partir de la seconde chambre à air (50) et pour l'alimenter vers la première chambre à air (32).

14. Gril électrique (10) selon l'une quelconque des revendications précédentes, comprenant en outre un couvercle qui peut être fermé sur les barres de gril (14) pour fournir une chambre de cuisson fermée.
